Europäisches Patentamt

European Patent Office

Office européen des brevets

(11) Veröffentlichungsnummer: **0 457 728 A1**

(12) **EUROPÄISCHE PATENTANMELDUNG**

(21) Anmeldenummer: 91810356.5

(22) Anmeldetag: 08.05.91

(51) Int. Cl.$^5$: **D06P 3/62, C09B 67/00,**
**D06P 1/52**

(30) Priorität: 18.05.90 CH 1699/90

(43) Veröffentlichungstag der Anmeldung:
21.11.91 Patentblatt 91/47

(84) Benannte Vertragsstaaten:
**CH DE ES FR GB IT LI**

(71) Anmelder: **CIBA-GEIGY AG**
**Klybeckstrasse 141**
**CH-4002 Basel (CH)**

(72) Erfinder: **Heindl, Anette**
**Obere Baselblick 2**
**W-7854 Inzlingen (DE)**
Erfinder: **Schaulin, Rudolf, Dr.**
**Schäferstrasse 62**
**CH-4125 Riehen (CH)**
Erfinder: **Stockhorst, Thomas**
**Mühlenweg 95**
**W-4290 Bocholt (DE)**

(54) **Verfahren zum endengleichen Färben von Cellulosefasern.**

(57)    Die Erfindung betrifft ein Verfahren zum endengleichen Färben von Cellulosefasern oder cellulosehaltigen Mischfasern mit Direktfarbstoffen nach dem Foulardverfahren, dadurch gekennzeichnet, dass man die Fasermaterialien mit einer wässrigen Flotte enthaltend einen oder mehrere entsalzte Farbstoffe und einen Migrationsinhibitor klotzt, dann abquetscht und anschliessend den Farbstoff auf den Fasermaterialien fixiert.

Das erfindungsgemässe Verfahren eignet sich zum Färben von textilen Cellulosefasern oder cellulosehaltigen Mischfasern, wobei endengleiche Färbungen mit guten Allgemeinechtheiten erzielt werden.

EP 0 457 728 A1

Die vorliegende Erfindung betrifft ein Verfahren zum endengleichen Färben von cellulosischen Textilfasermaterialien mit Direktfarbstoffen nach dem Foulard-, Klotzoder Pad-Verfahren.

Das Foulard-, Klotz- oder Pad-Verfahren ist ein für Cellulosefasern bekanntes Färbeverfahren, welches es erlaubt, durch Tränken bzw. Imprägnieren der Faser mit der Farbstofflösung in einem Trog bei kürzestem Mottenverhältnis und meist nur einmaliger Warenpassage auf dem Foulard bei kurzer Färbedauer grosse Metragen von textilen Fasermaterialien zu färben und anschliessend zu fixieren.

Ein bekannter Nachteil dieser Verfahrensweise ist die in vielen Fällen zu beobachtende Endenungleichheit der gefärbten Fasermaterialien (Partien).

Unter Endenungleichheit (tailing/reversed tailing) versteht man die Differenzen in der Stärke und Nuance zwischen dem Anfang und dem Ende einer Partie. Bei der Verwendung nur eines Farbstoffes macht sich die Endenungleichheit in Stärkedifferenzen bemerkbar, während bei Kombinationsfärbungen oft auch noch Verschiebungen in der Nuance auftreten können.

Unter tailing versteht man eine Abschwächung der Farbstärke zwischen Anfang und Ende der Partie, die auf eine Abnahme der Farbstoffkonzentration im Trog zurückzuführen ist. Diese Farbstoffvermung der Flotte wird durch ein Aufziehen des Farbstoffes bei dem Foulardierprozess verursacht. Auf dem tailing beruhende Stärke- und Nuancendifferenzen treten insbesondere bei Farbstoffen mit mittlerer bis hoher Substantivität, also bei Direktfarbstoffen, und ganz besonders häufig beim Färben heller Nuancen auf.

Unter reversed tailing versteht man eine Zunahme der Farbstärke zwischen Anfang und Ende der Partie, die auf der Zunahme der Farbstoffkonzentration im Trog beruht. Diese Farbstoffanreicherung in der Foulardflotte wird durch eine bevorzugte Wasseradsorption bei dem Foulardierprozess verursacht. Auf dem reversed tailing beruhende Stärke- und Nuancendifferenzen treten bei Farbstoffen niedriger Substantivität, besonders beim Färben dunkler Nuancen auf.

Die bisher ergriffenen Massnahmen zur Verbesserung der Endenungleichheit haben sich in der Praxis nicht durchsetzen können. So wird beispielsweise in der DE-A 1 619 537 der Zusatz von Harnstoff oder Thioharnstoff zur Klotzflotte vorgeschlagen; die eingesetzten Mengen von 150 g Harnstoff bzw. Thioharnstoff pro Liter Flotte bedeuten jedoch heute eine ökologisch nicht mehr vertretbare Belastung für die Abwässer.

Es besteht daher weiterhin das Befürfnis, die Endengleichheit beim Foulard-Färben mit Direktfarbstoffen zu verbessern.

Ueberraschenderweise wurde nun ein neues Verfahren gefunden, welches es erlaubt, auf einfache Weise und ohne die genannten Nachteile textile Cellulosefasern mit Direktfarbstoffen insbesondere in hellen Nuancen nach dem Foulard-, Klotz- oder Pad-Verfahren endengleich zu färben.

Gegenstand der vorliegenden Erfindung ist somit ein Verfahren zum endengleichen Färben von Cellulosefasern oder cellulosehaltigen Mischfasern mit Direktfarbstoffen nach dem Foulardverfahren, dadurch gekennzeichnet, dass man die Fasermaterialien mit einer wässrigen Motte enthaltend einen oder mehrere entsalzte Farbstoffe und einen Migrationsinhibitor klotzt, dann abquetscht und anschliessend den Farbstoff auf den Fasermaterialien fixiert.

Für das erfindungsgemässe Verfahren kommen alle üblichen Direktfarbstoffe ("Direct Dyes"), wie sie z.B. aus Colour Index, 3. Auflage ( 1971 ), Band 2, Seiten 2005 bis 2478, bekannt sind, in Frage.

Die bekannten Direktfarbstoffe sind bedingt durch ihren Herstellungsprozess und/oder die nachträgliche Zugabe von Coupagemitteln salzhaltig und müssen daher vor ihrer Verwendung im erfindungsgemässen Verfahren entsalzt werden.

Geeignete Entsalzungsverfahren, insbesondere Membrantrennverfahren wie z.B. Ultrafiltration, Umkehrosmose oder Dialyse sind z.B. aus der EP-A 0 059 782 bekannt.

Die nach der Entsalzung und Aufkonzentrierung mittels eines geeigneten Membrantrennverfahrens erhaltenen Flüssigformulierungen der Direktfarbstoffe können entweder direkt oder aber nach vorheriger Ueberführung in die entsalzte Pulverform, z.B. mittels Sprühtrocknung, in das erfindungsgemässe Verfahren eingesetzt werden.

Unter entsalzten Farbstoffen sind innerhalb der vorliegenden Erfindung generell solche Farbstoffe zu verstehen, die einen Salzgehalt von $\leq$ 2,5 %, vorzugsweise $\leq$ 1 % und besonders bevorzugt $\leq$ 0,5 %, bezogen auf das Gewicht des Farbstoffes, aufweisen.

Die Menge der Farbstoffe im erfindungsgemässen Verfahren richtet sich in der Regel nach der gewünschten Farbstärke, wobei sich Endenungleichheit insbesondere bei hellen Nuancen (Pastelltönen), d.h. bei einer Konzentration von 0,05 g oder weniger bis ca. 20 g pro Liter Flotte, bemerkbar macht.

Bevorzugt verwendet man Klotzflotten mit einer Farbstoffkonzentration von $\leq$ 5 g/l Flotte, insbesondere $\leq$ 3 g/l Flotte; die Flotte kann dabei einen oder auch mehrere Farbstoffe, z.B. eine einen gelben, roten und blauen Farbstoff enthaltende Trichromiemischung, enthalten.

Geeignete Migrationsinhibitoren bzw. Migrationshemmer sind dem Fachmann z.B. aus der Kontinuefärberei, ferner auch aus der Pigment- und Küpenfärberei bekannt; in Frage kommen z.B. Alginate, hochmolekulare Mischpolymerisate auf Basis von Acrylsäure oder Acrylamid mit anderen Monomeren, Alkylsulfate, Ethylenoxid-Anlagerungsprodukte, Polyglykolether, Oxypropylierungsprodukte, Cellulose- oder Stärkeether, Johannisbrotkernmehlether, Carboxymethylcellulosen, modifizierte Polysaccharide, Polyvinylalkohole oder andere Polyelektrolyte.

Beispiele für wirksame Migrationsinhibitoren bzw. Migrationshemmer sind z.B. aus dem Textilhilfsmittelkatalog 1986, Konradin-Verlag Robert Kohlhammer, Leinfelden-Echterdingen, Seiten 86-89, bekannt.

Bevorzugt ist die Verwendung von Polyacrylaten als Migrationsinhibitor im erfindungsgemässen Verfahren; die Polyacrylsäurederivate werden z.B. in Form einer wässrigen Lösung eingesetzt.

Der Migrationsinhibitor wird im allgemeinen in einer Menge von 0,5 bis 10 g, vorzugsweise 1 bis 7,5 g und besonders bevorzugt 1 bis 5 g, pro Liter Flotte eingesetzt.

Die Klotzflotte kann darüberhinaus übliche Hilfsmittel, z.B. anionische Mittel mit egalisierender, netzender und/oder dispergierender Wirkung enthalten. Entsprechende Egalisiermittel, Netzmittel oder Mittel mit dispergierender Wirkung sind an sich bekannt oder können in an sich bekannter Weise erhalten werden. Beispiele für solche anionischen Mittel sind: Salze längerkettiger Alkansulfonsäuren, z.B. $C_{11}$-$C_{18}$-Alkylsulfonate, Türkischrotöle, Alkylbenzylsulfonate, z.B. Salze von Dodecylbenzolsulfonsäuren, Alkyl-und Benzylnaphthalinsulfonate, Alkylaryldisulfonate, substituierte Naphthalinsulfonsäuren, kondensierte Phenol- oder Naphtholsulfonsäuren, Fettalkylsulfate, Fettsäureamidsulfonsäuren, Schwefelsäurehalbester von Fettaminpolyglykolethern, Alkylpolyglykolethersulfate, Polyglykoletherderivate von Alkylheterocyclylsulfonaten, z.B. Polyglykoletherderivate von sulfonierten Alkylbenzimidazolen, Eiweiss-Fettsäure-und Naphthalinsulfosäure-Formaldehyd-Kondensationsprodukte, Ester von anorganischen Säuren.

Die erfindungsgemäss verwendete Klotzflotte enthält vorzugsweise ein übliches anionisches Netzmittel, z.B. einen Ester einer anorganischen Säure; weist die Klotzflotte ein anionisches Egalisiermittel auf, so ist hierbei die Verwendung von Polyglykoletherderivaten von sulfonierten Alkylbenzimidazolen bevorzugt.

Die Menge der oben genannten anionischen Mittel in der Klotzflotte kann innerhalb weiter Grenzen schwanken; als gut geeignet hat sich eine Menge von 0,2- 10 g, vorzugsweise von 0,25-5 g und besonders bevorzugt 0,4- 1,5 g pro Liter Flotte erwiesen. Man verwendet z.B. ein einzelnes anionisches Mittel oder aber ein Gemisch verschiedener oben genannter anionischer Mittel.

Die Klotzflotten werden zweckmässigerweise durch Lösen des Farbstoffes bzw. Zusatz der flüssigen Farbstofformulierung sowie durch Zugabe des anionischen Egalisiermittels und gegebenenfalls weiterer oben genannter Hilfsmittel vorbereitet.

Das Aufbringen der Flotte auf das Gewebe erfolgt im allgemeinen bei gewöhnlicher bis mässig erhöhter Temperatur, d.h. bei einer Temperatur von 15 bis 40°C, und vorzugsweise bei Raumtemperatur.

Die Farbstoff-Fixierung erfolgt nach üblichen Verfahren, z.B. mit Dampf (Pad-Steam-Verfahren), durch Verweilen lassen bei gewöhnlicher bis mässig erhöhter Temperatur, d.h. bei einer Temperatur von z.B. 15 bis 40°C (Kaltverweilverfahren) oder mittels Mikrowellen.

Erfolgt die Farbstoff-Fixierung nach dem Pad-Steam-Verfahren, so sind die benötigte Fixierzeit und -temperatur z.B. vom verwendeten Textilmaterial und Farbstoff abhängig. Zur Erzielung einer gleichmässigen und optimalen Farbstoff-Fixierung genügen im allgemeinen Dämpfzeiten im Sattdampf zwischen 30 Sekunden und 15 Minuten bei 100 bis 105°C. Durch Hochtemperatur-Dämpfen bzw. Trockenhitze-Dämpfen wird z.B. während 20 Sekunden bis 8 Minuten bei 105 bis 190°C fixiert. Auf Mischgeweben, wie z.B. Polyester/Cellulose-Mischgeweben werden die Farbstoffe z.B. bei 100 bis 200°C, vorzugsweise bei 150 bis 200°C fixiert, wobei die Fixierzeit z.B. zwischen 10 Sekunden und 10 Minuten liegt. Gegebenenfalls wird das Textilmaterial vor dem Fixieren getrocknet.

Zur Mikrowellen-Fixierung wird das geklotzte textile Material z.B. in einen wasserhaltigen Behälter gehängt und dieser für eine bestimmte Zeit, z.B. 15 Sekunden bis 10 Minuten, vorzugsweise 30 Sekunden bis 5 Minuten, in ein handelsübliches Mikrowellengerät gestellt.

Vorzugsweise führt man jedoch die Farbstoff-Fixierung nach dem Kaltverweilverfahren durch und lässt das geklotzte und abgequetschte Gewebe z.B. 6 bis 48 Stunden, vorzugsweise 10 bis 24 Stunden, bei Raumtemperatur in aufgerolltem Zustand verweilen.

Im Anschluss an den Färbeprozess wird das gefärbte Material im allgemeinen gespült, wobei dieser Waschvorgang z.B. in einer Behandlung des Substrats bei 40°C bis Kochtemperatur in einer Lösung, die Seife oder ein synthetisches Waschmittel enthält, oder in einer Behandlung mit kaltem Wasser unter Salzzusatz bestehen kann. Anschliessend können Nachbehandlungen, z.B. eine Nachbehandlung zur Verbesserung der Nassechtheiten mit einem Fixiermittel in üblicher Weise oder eine Kunstharzausrüstung, erfolgen.

Als cellulosische Textilfasermaterialien kommen solche Materialien in Betracht, die ganz oder teilweise aus Cellulose bestehen. Beispiele sind natürliche Fasermaterialien wie mercerisierte oder gebleichte Baumwolle oder Leinen (gebleicht), regenerierte Fasermaterialien wie z.B. Viskose, Polynosic und Kupferkunstseide oder cellulosehaltige Mischfasermaterialien wie z.B. Polyester/Baumwolle-Materialien.

3

Hauptsächlich werden Gewebe, Gewirke oder Bahnen dieser Fasern verwendet.

Eine bevorzugte Ausführungsform der vorliegenden Erfindung betrifft ein Verfahren zum endengleichen Färben von Textilfasermaterialien aus mercerisierter oder gebleichter Baumwolle oder von textilen Polyester/Baumwolle-Mischfasermaterialien mit Direktfarbstoffen nach dem Foulardverfahren, dadurch gekennzeichnet, dass man die Fasermaterialien mit einer wässrigen Flotte enthaltend ≦ 5 g/l Farbstoff mit einem Salzgehalt von ≦ 2,5 %, bezogen auf das Festgewicht des Farbstoffes, und 1 bis 7,5 g/l eines Polyacrylats als Migrationsinhibitor klotzt, dann abquetscht und anschliessend den Farbstoff unter Verwendung des Kaltverweilverfahrens auf der Faser fixiert.

Eine besonders bevorzugte Ausführungsform der vorliegenden Erfindung betrifft ein Verfahren zum endengleichen Färben von Textilfasermaterialien aus mercerisierter oder gebleichter Baumwolle mit Direktfarbstoffen nach dem Foulardverfahren, dadurch gekennzeichnet, dass man die Fasermaterialien mit einer wässrigen Flotte enthaltend ≦ 3 g/l Farbstoff mit einem Salzgehalt von ≦ 1 % bezogen auf das Gewicht des Farbstoffes, 1 bis 5 g/l einer wässrigen Lösung eines Polyacrylsäurederivats als Migrationsinhibitor und insgesamt 0,25 bis 5 g/l eines oder mehrerer anionischer Netz- und/oder Egalisiermittel klotzt, dann abquetscht und anschliessend 6 bis 48 Stunden bei Raumtemperatur in aufgerolltem Zustand verweilen lässt.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben.

Beispiel 1: Gebleichtes Baumwoll-Cretonne-Gewebe wird auf dem Foulard mit einem Abquetscheffekt von 80 % Flottenaufnahme mit einer Klotzflotte folgender Zusammensetzung imprägniert:

0,5 g/l des entsalzten gelben Farbstoffes C.I. Direct Yellow 106, Const. No. 40300, Salzgehalt 1,0 %
0,5 g/l des entsalzten roten Farbstoffes C.I. Direct Red 89, Salzgehalt < 0,1 %
0,5 g/l des entsalzten blauen Farbstoffes C.I. Direct Blue 85, Salzgehalt < 0,1 %. (Entsalzung der Farbstoffe mittels Dialyse)
1 g/l eines anionischen Netzmittels (Ester einer anorganischen Säure)
5,0 g/l eines Migrationsinhibitors (wässrige Lösung eines Polyacrylsäurederivats)
0,5 g/l eines anionischen Egalisiermittels (Polyglykoletherderivat eines sulfonierten Alkylbenzimidazols)

Die geklotzte Ware wird aufgewickelt und anschliessend 16 Stunden bei Raumtemperatur unter ständiger Rotation verweilen gelassen. Danach wird das Gewebe gespült und mit einer frischen Flotte enthaltend 40 g/l eines Fixiermittels auf Basis von Polyethylenpolyamin nachgehandelt.

Man erhält ein endengleich braun gefärbtes Gewebestück mit guten Allgemeinechtheiten.

Beispiel 2: Verfährt man wie in Beispiel 1 beschrieben, setzt jedoch je 0, 1 g/l gelben, roten und blauen Farbstoff anstelle von je 0,5 g/l dieser Farbstoffe ein, erhält man ebenfalls ein endengleich braun gefärbtes Gewebestück mit guten Allgemeinechtheiten.

Beispiel 3: Gebleichtes Baumwoll-Cretonne-Gewebe wird auf dem Foulard mit einem Abquetscheffekt von 80 % Flottenaufnahme mit einer Klotzflotte folgender Zusammensetzung imprägniert:

0,5 g/l des entsalzten gelben Farbstoffes C.I. Direct Yellow 39, Salzgehalt ≦ 1,0 % (Entsalzung des Farbstoffes mittels Dialyse)
1 g/l eines anionischen Netzmittels (Ester einer anorganischen Säure)
5,0 g/l eines Migrationsinhibitors (wässrige Lösung eines Polyacrylsäurederivats)
0,5 g/l eines anionischen Egalisiermittels (Polyglykoletherderivat eines sulfonierten Alkylbenzimidazols)

Die geklotzte Ware wird aufgewickelt und anschliessend 16 Stunden bei Raumtemperatur unter ständiger Rotation verweilen gelassen. Danach wird das Gewebe gespült.

Man erhält ein endengleich gelb gefärbtes Gewebestück mit guten Allgemeinechtheiten.

Beispiel 4: Gebleichtes Baumwoll-Cretonne-Gewebe wird auf dem Foulard mit einem Abquetscheffekt von 80 % Flottenaufnahme mit einer Klotzflotte folgender Zusammensetzung imprägniert:

0,5 g/l des entsalzten blauen Farbstoffes C.I. Direct Blue 199, Salzgehalt ≦1,0 % (Entsalzung des Farbstoffes mittels Dialyse)
1 g/l eines anionischen Netzmittels (Ester einer anorganischen Säure)
5,0 g/l eines Migrationsinhibitors (wässrige Lösung eines Polyacrylsäurederivats)
0,5 g/l eines anionischen Egalisiermittels (Polyglykoletherderivat eines sulfonierten Alkylbenzimidazols)

Die geklotzte Ware wird aufgewickelt und anschliessend 16 Stunden bei Raumtemperatur unter ständiger Rotation verweilen gelassen. Danach wird das Gewebe gespült und mit einer frischen Flotte enthaltend 40 g/l eines Fixiermittels auf Basis von Polyethylenpolyamin nachgehandelt. Man erhält ein endengleich blau gefärbtes Gewebestück mit guten Allgemeinechtheiten.

Beispiele 5 bis 19: Verfährt man wie in den Beispielen 3 oder 4 Beschrieben und verwendet anstelle der dort eingesetzten Farbstoffe äquivalente Mengen der in der folgenden Tabelle genannten Farbstoffe, erhält man ebenfalls endengleiche Färbunben mit guten Allgemeinechtheiten:

Tabelle:

| Beispiel Nr. | Farbstoff |
|---|---|
| 5 | Colour Index Direct Blue 71, Const.No. 34140 |
| 6 | Colour Index Direct Blue 78, Const.No. 34200 |
| 7 | Colour Index Direct Blue 85 |
| 8 | Colour Index Direct Blue 90 |
| 9 | Colour Index Direct Red 23, Const.No. 29160 |
| 10 | Colour Index Direct Red 80, Const.No. 35780 |
| 11 | Colour Index Direct Red 89 |
| 12 | Colour Index Direct Red 224 |
| 13 | Colour Index Direct Yellow 50, Const.No. 29025 |
| 14 | Colour Index Direct Yellow 106, Const.No. 40300 |
| 15 | Colour Index Direct Yellow 130 |
| 16 | Colour Index Direct Yellow 142 |
| 17 | Colour Index Direct Yellow 169 |
| 18 | Colour Index Direct Black 62 |
| 19 | Colour Index Direct Black 112 |

**Patentansprüche**

1. Verfahren zum endengleichen Färben von Cellulosefasern oder cellulosehaltigen Mischfasern mit Direktfarbstoffen nach dem Foulardverfahren, dadurch gekennzeichnet, dass man die Fasermaterialien mit einer wässrigen Flotte enthaltend einen oder mehrere entsalzte Farbstoffe und einen Migrationsinhibitor klotzt, dann abquetscht und anschliessend den Farbstoff auf den Fasermaterialien fixiert.

2. Verfahren gemäss Anspruch 1, dadurch gekennzeichnet, dass die Direktfarbstoffe einen Salzgehalt von $\leqq 2,5\,\%$, vorzugsweise $\leqq 1\,\%$ und besonders bevorzugt $\leqq 0,5\,\%$, bezogen auf das Gewicht des Farbstoffes, aufweisen.

3. Verfahren gemäss Anspruch 1 oder 2, dadurch gekennzeichnet, dass der Farbstoffgehalt der Foulardierflotte $\leqq 5$ g, vorzugsweise $\leqq 3$ g pro Liter Flotte beträgt.

4. Verfahren gemäss einem der Ansprüche 1 bis 3, dadurch gekennzeichnet, dass man Alginate, hochmolekulare Mischpolymerisate auf Basis von Acrylsäure oder Acrylamid mit anderen Monomeren, Akylsulfate, Ethylenoxid-Anlagerungsprodukte, Polyglykolether, Oxypropylierungsprodukte, Cellulose- oder Stärkeether, Johannisbrotkemmehlether, Carboxymethylcellulosen, modifizierte Polysaccharide, Polyvinylalkohole oder andere Polyelektrolyte als Migrationsinhibitor verwendet.

5. Verfahren gemäss Anspruch 4, dadurch gekennzeichnet, dass man Polyacrylsäurederivate als Migrationsinhibitor verwendet.

6. Verfahren gemäss einem der Ansprüche 1 bis 5, dadurch gekennzeichnet, dass der Migrationsinhibitor in der Foulardierflotte in einer Konzentration von 0,5 bis 10 g, vorzugsweise 1 bis 7,5 g und besonders bevorzugt 1 bis 5 g, pro Liter Flotte enthalten ist.

7. Verfahren gemäss einem der Ansprüche 1 bis 6, dadurch gekennzeichnet, dass die Foulardierflotte zusätzlich eines oder mehrere verschiedene anionische Mittel mit egalisierender, netzender und/oder dispergierender Wirkung enthält.

8. Verfahren gemäss einem der Ansprüche 1 bis 7, dadurch gekennzeichnet, dass die Fixierung des Farbstoffes auf der Faser unter Verwendung des Kaltverweilverfahrens erfolgt.

9. Verfahren gemäss Anspruch 8, dadurch gekennzeichnet, dass man die geklotzte und abgequetschte Ware 6 bis 48 Stunden, vorzugsweise 10 bis 24, bei Raumtemperatur in aufgerolltem Zustand verweilen lässt.

10. Verfahren gemäss einem der Ansprüche 1 bis 7, dadurch gekennzeichnet, dass die Fixierung des Farbstoffes auf der Faser unter Verwendung des Pad-Steam-Verfahrens erfolgt.

11. Verfahren gemäss einem der Ansprüche 1 bis 10 zum Färben von Textilfasermaterialien aus mercerisierter oder gebleichter Baumwolle, Leinen, Viskose, Polynosic oder Kupfer-Kunstseide oder von textilen Polyester/Baumwolle-Mischfasermaterialien.

12. Verfahren zum endengleichen Färben von Textilfasermaterialien aus mercerisierter oder gebleichter Baumwolle oder von textilen Polyester/Baumwolle-Mischfasermaterialien mit Direktfarbstoffen nach dem Foulardverfahren, dadurch gekennzeichnet, dass man die Fasermaterialien mit einer wässrigen Flotte enthaltend $\leq$ 5 g/l Farbstoff mit einem Salzgehalt von $\leq$ 2,5 %, bezogen auf das Festgewicht des Farbstoffes, und 1 bis 7,5 g/l eines Polyacrylats als Migrationsinhibitor klotzt, dann abquetscht und anschliessend den Farbstoff unter Verwendung des Kaltverweilverfahrens auf der Faser fixiert.

13. Verfahren zum endengleichen Färben von Textilfasermaterialien aus mercerisierter oder gebleichter Baumwolle mit Direktfarbstoffen nach dem Foulardverfahren, dadurch gekennzeichnet, dass man die Fasermaterialien mit einer wässrigen Flotte enthaltend $\leq$ 3 g/l Farbstoff mit einem Salzgehalt von $\leq$ 1 % bezogen auf das Gewicht des Farbstoffes, 1 bis 5 g/l einer wässrigen Lösung eines Polyacrylsäurederivats als Migrationsinhibitor und insgesamt 0,25 bis 5 g/l eines oder mehrerer anionischer Netz- und/oder Egalisiermittel klotzt, dann abquetscht und anschliessend 6 bis 48 Stunden bei Raumtemperatur in aufgerolltem Zustand verweilen lässt.

**Europäisches Patentamt**

# EUROPÄISCHER RECHERCHENBERICHT

Nummer der Anmeldung

EP    91 81 0356

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-243939 (BASF AG)<br>* das ganze Dokument *<br>--- | 1-5, 12, 13 | D06P3/62<br>C09B67/00<br>D06P1/52 |
| X | EP-A-19188 (HOECHST AG)<br>* Seite 1, Zeile 1 - Seite 2, Zeile 11 *<br>* Seite 4, Zeilen 7 - 11 *<br>--- | 1-5, 12, 13 | |
| X | DATABASE WPIL, no 83-836469<br>Derwent Publ. Ltd. London, GB<br>& JP-A-58186683 (Sumimoto Chem. KK)(31.10.1983)<br>* the whole abstract *<br>--- | 1, 4 | |
| X | DATABASE WPIL, no 87-254900<br>Derwent Publ. Ltd. London, GB, & JP-A-62177287<br>(Daicel Chem. Ind. KK)(04.08.1987)<br>* the whole abstract *<br>------ | 1, 4 | |
| | | | **RECHERCHIERTE SACHGEBIETE (Int. Cl.5 )**<br><br>D06P |

Der vorliegende Recherchenbericht wurde für alle Patentansprüche erstellt

| Recherchenort | Abschlußdatum der Recherche | Prüfer |
|---|---|---|
| DEN HAAG | 28 JUNI 1991 | DELZANT J-F. |